# FASCICULE DE BREVET EUROPEEN

(11) **EP 0 488 878 B1**
(45) Date de publication et mention de la délivrance du brevet: **17.01.1996**
(21) Numéro de dépôt: 91403191.9
(22) Date de dépôt: 26.11.1991
(51) Int. Cl.: H05B 3/84, H05B 3/06

(54) **Pièces de connexion pour vitrages électrifies**
Anschlussstück für elektrische Scheiben
Connecting piece for electrical windows

(30) Priorité: 30.11.1990 FR 9015082
(43) Date de publication de la demande: 03.06.1992
(73) Titulaire: SAINT-GOBAIN VITRAGE, F-92400 Courbevoie (FR)
(72) Inventeur: Dechoux, Jean-Luc, F-60200 Compiegne (FR)
(74) Mandataire: Menes, Catherine

(56) Documents cités:
- EP-A- 0 023 121
- EP-A- 0 045 727
- EP-A- 0 217 703
- FR-A- 2 212 734
- FR-A- 2 519 477
- US-A- 3 996 447

## Description

L'invention concerne une pièce de connexion pour vitrage électrifiée destinée au raccordement avec un réseau électrique de bandes ou couches électroconductrices déposées à la surface du vitrage. L'invention s'applique notamment aux vitrages chauffants des véhicules automobiles et aux vitrages bâtiments munis d'un dispositif d'alarme en cas de bris.

Pour réaliser un vitrage chauffant du type lunette arrière d'automobile, on procède au dépôt par sérigraphie à la surface d'une feuille de verre d'une série de bandes de résistance étroites faites d'une suspension pâteuse dans un liant organique d'argent métallique et d'une fritte, autrement dit un verre à bas point de fusion. Après cuisson, on obtient un réseau de fines bandes électroconductrices qui débouchent sur des bandes collectrices plus larges d'une composition analogue, situées près des bords de la feuille de verre pour ne pas gêner la visibilité du conducteur. Sur ces bandes collectrices on vient ensuite souder des pièces de connexion métalliques qui vont constituer des cosses terminales pour le réseau électrique du véhicule.

Ces pièces de connexion métalliques sont typiquement formées par des plaques en cuivre en forme de T dont les deux branches sont prolongées par des pieds sous lesquels vient la brasure faite d'un alliage d'apport à base d'étain. Cet apport se présente sous forme de fils, lamelles ou bandes introduits entre la bande collectrice et la pièce de connexion au moment de la soudure ou encore déposé directement sur une pièce de connexion pré-étamée.

Dans tous les cas, on chauffe la pièce de connexion pour faire fondre la brasure par conduction et permettre à l'étain une fois refroidi d'assurer une liaison permanente entre la bande et la dite pièce de connexion. Ce chauffage est obtenu selon le procédé choisi par conduction, par exemple en appliquant le plat d'un fer à souder sur la pièce de connexion, par convection, en soufflant de l'air chaud sur la pièce à braser, ou encore par effet Joule dû au passage d'un courant électrique. Mais quel que soit le procédé utilisé, une pression élevée doit être exercée sur la pièce de connexion pour assurer la soudure. Le problème est que si cette pression est trop forte, on risque d'écraser la brasure et de la chasser sur les bords lors de sa fusion. Même si une partie de la brasure reste sous la pièce de connexion, la soudure est alors peu fiable et peu résistante.

Les documents EP 0 045 727 et EP 0 023 121 divulguent notamment un élément de connexion comportant un espace libre de réserve de brasure. Cependant, si cet espace de réserve permet, notamment, d'après le document EP 0 023 121, d'obtenir une bonne soudure, des débordements d'un aspect inesthétique peuvent se produire.

L'objet de la présente invention est la réalisation d'une nouvelle pièce de connexion pour vitrages électrifiés qui permet d'assurer des soudures de qualité sans précautions particulières prises par le soudeur.

Ce but est atteint conformément à la revendication 1 par une pièce de connexion métallique en forme de T dont les branches sont prolongées par des pieds destinés à être soudés à la surface d'un vitrage, la face inférieure desdits pieds étant munie de renflements sous forme de demi-sphères, pyramides, cylindres, cannelures ou plots cannelés qui servent à maintenir une distance minimale et régulière entre ladite face inférieure du pied et la surface du vitrage en définissant une réserve de brasure quand la pièce métallique de connexion est pressée sur le vitrage. Leur hauteur varie par exemple entre 0,1 et 2 mm selon les paramètres de la soudure et de la brasure considérées. Dans tous les cas, cette hauteur doit être suffisante pour définir une réserve de brasure qui sera préservée même si la pièce de connexion est très fortement pressée sur le vitrage.

Selon un second mode de réalisation de l'invention, les pièces de connexion sont cambrées, la cambrure pouvant être simple ou double et étant de préférence pratiquée sur le côté le plus long du pied de la pièce de connexion.

D'autres détails et caractéristiques avantageuses de l'invention ressortent de la description suivante faite en référence aux dessins annexes qui représentent.
* **figure 1** : une pièce de connexion traditionnelle soudée sur un vitrage,
* **figure 2** : une pièce de connexion selon l'invention.
* **figure 3** : une vue de coté de la pièce de connexion de la figure 1,
* **figure 4** : une pièce de connexion selon le second mode de réalisation de l'invention,
* **figure 5** : une autre pièce de connexion selon le second mode de réalisation de l'invention.

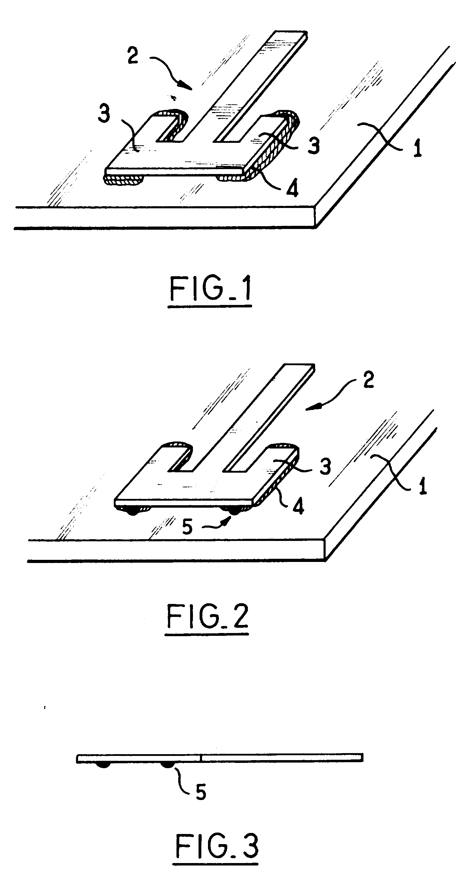

La figure 1 est une vue schématique d'une pièce de connexion traditionnelle soudée sur une feuille de verre 1 revêtue de bandes ou de couches électroconductrices ici non représentées. La pièce de connexion 2 est constituée par une plaque métallique en forme de T munie de deux pieds 3 soudés à la feuille de verre par une brasure à l'étain 4. Comme il est visible sur cette figure, une grande partie de la brasure est chassée sur les bords si la pièce de connexion est trop fortement pressée sur le vitrage au moment où la brasure est fondue. Il en résulte une soudure ayant une mauvaise tenue, la quantité d'étain faisant la liaison entre un pied 3 et la feuille de verre 2 pouvant être localement pratiquement nulle.

Ce problème est évité avec la pièce de connexion selon l'invention dont les faces inférieures des pieds 3 sont munies de renflements 5 qui maintiennent un certain espace entre les pieds 3 de la connexion 2 et la feuille de verre 1 de sorte qu'un volume suffisant pour la brasure 4 est systématiquement maintenu disponible. Même en cas de pressage excessif, la soudure est donc assurée. De plus elle est plus "propre" donc un peu plus esthétique.

Comme il est plus particulièrement visible à la figure 3, chaque pied 3 est avantageusement muni de deux renflements 5 mais ce nombre et la densité des renflements peut varier dans une large mesure de même que leur hauteur, de préférence comprise entre 0,1 et 2 mm et leur forme (demi-sphère, pyramides, cylindres, plots carrés, cannelures etc...)

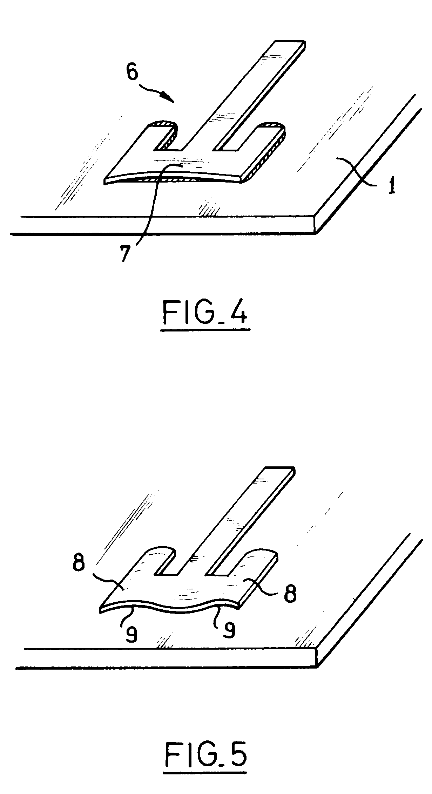

Les figures 4 et 5 illustrent le second mode de réalisation de l'invention. Dans le cas de la figure 4, la pièce de connexion 6 est cambrée sur son côté le plus long 7 ce qui ménage un volume libre entre la feuille de verre et la pièce 6. On retrouve de même ce principe d'un volume 9 dégagé sous chacun des pieds 8 avec une double cambrure comme illustré à la figure 5.

La pièce de connexion est le plus souvent en cuivre mais peut être également réalisée en tout autre métal ou alliage conducteur. Comme indiqué précédemment elle peut éventuellement être pré-étamée. De forme plate, coudée ou allongée elle comporte au moins une portion plate plus particulièrement destinée à la soudure correspondant aux pieds 3. Ces pieds de soudure ont de préférence une surface inférieure légèrement rainurée ou striée afin de conférer à cette face une rugosité favorisant la tenue de la brasure. Ces pieds ont typiquement une forme rectangulaire, ronde ou oblongue selon l'aspect général souhaité de la pièce de connexion.

De manière connue, la pièce peut également comporter un trou qui sert à riveter la plaque d'étain de soudure dans la phase de pré-étamage.

L'invention s'applique tout particulièrement aux vitrages automobiles du type lunette arrière ou pare-brise chauffant. Dans ce dernier cas, la pièce de connexion peut être directement soudée à la couche électroconductrice transparente ou sur une bande émaillée conductrice répartissant la densité du courant électrique sur toute la largeur du vitrage. L'invention peut être également appliquée à d'autres types de vitrages électrifiés notamment à des vitrages bâtiments munis de dispositifs d'alarme, qui signalent la coupure du circuit électrique due au bris de la fenêtre.

## Revendications

1. Pièce métallique de connexion (2) en forme de T dont les branches sont prolongées par des pieds (3) destinés à être soudés à la surface d'un vitrage (1), **caractérisée en ce qu'**elle est plate **et en ce que** la face inférieure des pieds (3) est munie de renflements (5) sous forme de demi-sphères, pyramides, cylindres, cannelures ou plots cannelés, qui servent à maintenir une distance minimale et régulière entre ladite face inférieure et la surface du vitrage en définissant une réserve de brasure quand la pièce métallique de connexion est pressée sur le vitrage.

2. Pièce métallique de connexion (2) selon la revendication 1, **caractérisée en ce que** lesdits renflements (5) ont une hauteur comprise entre 0,1 et 2 mm.

3. Pièce métallique de connexion (2) selon l'une des revendications précédentes, **caractérisée en ce que** chaque pied (3) est muni de deux renflements (5).

4. Pièce métallique de connexion (2) selon l'une des revendications précédentes, **caractérisée en ce que** la face inférieure plate des pieds (3) est en outre légèrement rainurée ou striée afin de conférer à ladite face une rugosité favorisant la tenue à la brasure.

5. Vitrage muni d'un réseau électrique chauffant formé de fines bandes électroconductrices muni de pièces métalliques selon l'une des revendications 1 à 4 soudées par une brasure (4) aux bandes collectrices auxquelles aboutissent les fines bandes électroconductrices.

6. Vitrage muni d'une couche électroconductrice transparente sur laquelle est soudée par brasure (4) une pièce métallique de connexion conforme à l'une des revendications 1 à 4.

## Patentansprüche

1. T-förmiges Metallanschlußstück (2), dessen Arme durch Füße (3) verlängert sind, die zum Anlöten auf der Oberfläche einer Verglasung (1) vorgesehen sind, **dadurch gekennzeichnet, daß** das Anschlußstück flach und daß die Unterseite der Füße (3) mit Verstärkungen (5) in der Form von Halbkugeln, Pyramiden, Zylindern, Rillen oder gerippten Blöcken versehen ist, die dazu dienen, zwischen dieser Unterseite und der Oberfläche der Verglasung einen minimalen und regelmäßigen Abstand aufrechtzuerhalten, wodurch sich, wenn das Metallanschlußstück auf die Verglasung gepreßt wird, eine Lötreserve bildet.

2. Metallanschlußstück (2) nach Anspruch 1, **dadurch gekennzeichnet, daß** die Verstärkungen (5) zwischen 0,1 und 2 mm hoch sind.

3. Metallanschlußstück (2) nach Anspruch 1 oder 2, **dadurch gekennzeichnet, daß** jeder Fuß (3) mit zwei Verstärkungen (5) versehen ist.

4. Metallanschlußstück (2) nach einem der vorhergehenden Ansprüche, **dadurch gekennzeichnet, daß** die flache Unterseite der Füße (3) außerdem, um ihr eine Rauhigkeit zu verleihen, welche die Festigkeit der Lötverbindung begünstigt, leicht ausgekehlt oder gerillt ist.

5. Verglasung, ausgestattet mit einem elektrisch beheizbaren Netz, das aus elektrisch leitfähigen feinen Bändern gebildet und mit Metallanschlußstücken nach einem der Ansprüche 1 bis 4 versehen ist, welche durch eine Lötverbindung (4) auf Sammelbändern angelötet sind, an denen die elektrisch leitfähigen feinen Bänder enden.

6. Verglasung, versehen mit einer durchsichtigen elektrisch leitfähigen Schicht, auf welcher ein Metallanschlußstück nach einem der Ansprüche 1 bis 4 mit einer Lötverbindung (4) angelötet ist.

## Claims

1. A metallic connection member (2) in the form of a "T" the arms of which are extended by feet (3) arranged to be joined to the surface of a glass pane (1) characterised in that the member is flat and in that the rear surface of the feet (3) is provided with bulges (5) in the form of semispheres, pyramids, cylinders, corrugations or channelled studs which act to maintain a minimum and regular distance between the said rear surface and the surface of the pane so as to define a brazing reservation when the metallic connection member is pressed onto the pane.

2. A metallic connection member (1) according to claim 1 characterised in that said bulges (5) have a height of between 0.1 mm and 2 mm.

3. A metallic connection member (2) according to any one of the preceding claims characterised in that each foot (3) is provided with two bulges (5).

4. A metallic connection member (2) according to any one of the preceding claims characterised in that the rear flat surface of the feet (3) is further lightly grooved or striated so as to provide said surface with a roughening assisting the retention of the brazing.

5. A glass pane provided with an electrical heating current formed from fine electroconductive strips provided with metallic members according to any one of claims 1 to 4 joined together by brazing (4) to collector strip which are formed to the ends of the electroconductive strips.

6. A pane provided with a transparent electroconductive layer onto which is joined by brazing (4) a metallic connection member formed according to any one of claims 1 to 4.
